# EUROPEAN PATENT APPLICATION

(11) **EP 2 482 239 A1**
(43) Date of publication of application: **01.08.2012**
(21) Application number: 11189502.5
(22) Date of filing: 09.02.2011
(51) Int. Cl.: G06Q 10/00

(54) **METHOD AND SYSTEM FOR SPLIT MEDIUM MAIL SOLUTION FOR CUSTOMER COMMUNICATIONS**

(30) Priority: 10.02.2010 US 703608
(62) Divisional of application: 11153829.4
(71) Applicant: BOWE BELL + HOWELL COMPANY, Wheeling IL 60090-6232 (US)
(72) Inventor: Maselli, Michael J., Cary, NC North Carolina 27519 (US)
(74) Representative: Zimmermann, Tankred Klaus

(57) **Abstract**

The present teachings provide and method and system for a split medium mail for customer communications. The present application relates to techniques and equipment used to create a single summary (130, 140) communication included in a mailpiece to be mailed to a customer. The single page summary (130) contains information necessary to access a full version of the customer communication by way of secure web access (600).

## Description

### Technical Field

The present subject matter relates to techniques and equipment to create a single page summary communication included in a mailpiece to be mailed to a customer. The single page summary contains information necessary to access a full version of the customer communication by way of secure web access.

### Background

Companies in certain vertical markets, including those in the banking and financial, teleco, insurance, etc, have many high volume application types with greater than 2 pages. Most of these organizations have attempted to get their customers to sign up for electronic statements (e-Statements), with mixed levels of acceptance. A very significant percentage of the customers want hard copy statements that are mailed. Mailing a full statement is by far the most expensive method of communicating with the customer, particularly when the statement is multiple pages. In fact, it is common to have a statement which is too large to be folded into a letter envelope. These statements have to be sent as flat mail at much higher postage and production costs. Even for those customers that accept eStatements, they are required to setup accounts with USERIDS and passwords that must be recorded and remembered in order to sign onto the appropriate web page. Further problems occur for the eStatement users if they do not regularly check there e-mail account, since an eStatement can be missed and a payment missed. However, studies have shown that nearly everyone has a daily "mail moment" where they will examine the mail received that day. There is no current solution available that combines the advantages of both the hard copy statement and the statement.

In order to be able to offer companies and their customers with applications that offer a cost competitive solution and a satisfactory experience, there needs to be a change in the way companies think about document production by providing a better way to produce mail which increases productivity, provides a better customer experience, is a greener process, satisfies delivery preferences for multiple mediums, and has a very achievable return on any investment (ROI) that is required.

Hence a need exists for a system to deliver a messaging solution that combines a summary statement on a single page included in a mailpiece with secure web access to a detailed statement data. A solution must include an ability to redesign documents into summary statements in a print format that follows inserter or wrapping system design guidelines, and reformat detailed statements into an electronically viewable format such as the PDF format. The solution must have the ability to pre-enroll customers for electronic statement access, and provide those user/customer credentials on the printed summary statement. The solution must further have the ability to wrap or insert the single page summary at high production speeds and maintain the single page summary document cost below the cost of a traditional document.

Any solution may optionally require the ability to host the electronic documents in a data center that satisfies corporate and industry security requirements and provide a customer service portal for agents to handle support issues involving both print summary and electronic detailed statements.

### Summary

It is desirable to provide a method for providing a single page summary for a mailpiece and access to expanded customer data by way of a secure website. The method includes extracting summary data from an electronic representation of a customer communication and generating secure logon data for web access by the customer. The summary data and secure logon web access data are converted into a single page print file. The summary data and secure logon web access data are printed as a single page summary. A mailpiece is created which contains the printed single page by way of a document processing system. The expanded customer data is converted into a web accessible file format and saved in an electronic format.

It is further desirable to provide a method for processing a customer record. The method includes parsing the customer record which is stored as either raw data or as a print file. The customer record is parsed into: summary data required for generation of a single page customer communication to be mailed to a customer, and expanded data to be available to the customer by way of web access. A password and customer identifier are generated and are to be provided to the customer on the single page customer communication. The summary data is converted into a print file used to create the single page customer communication. The expanded data is reformatted into a web accessible file format, wherein the web accessible file format is associated with the password and customer identifier.

It is yet further desirable to provide a system for providing a single page summary for a mailpiece and access to expanded customer data by way of a secure website. The system includes a processor that is configured to extract summary data from an electronic representation of a customer communication. Secure logon data is generated for web access by the customer. The summary data and secure logon web access data are converted into a single page print file. The expanded customer data is converted into a web accessible file format and saved in an electronic format. A printer is provided for printing a single page summary. The single page summary includes the summary data and secure logon web access data. A document processing system is configured to generate a mailpiece including the single page summary.

Additional objects, advantages and novel features will be set forth in part in the description which follows, and in part will become apparent to those skilled in the art upon examination of the following and the accompanying drawings or may be learned by production or operation of the examples. The objects and advantages of the present teachings may be realized and attained by practice or use of the methodologies, instrumentalities and combinations particularly pointed out in the appended claims.

### Brief Description of the Drawings

The drawing figures depict one or more implementations in accord with the present teachings, by way of example only, not by way of limitation. In the figures, like reference numerals refer to the same or similar elements.

FIG. 1 is an exemplary diagram of the system components for the split medium solution.

FIG. 2 is an exemplary flow diagram of the processes performed in the data center processer.

FIG. 3 is an exemplary format for a single page summary statement for use on a mailpiece inserter.

FIG. 4 is an exemplary format for a single page summary statement for use on a mailpiece wrapping machine.

FIG. 5 is an exemplary system flow diagram for the creation of a single page summary statement and utilization of the web access to view the statement.

FIG. 6 is an exemplary format for the web logon screen

FIG. 7 is an exemplary web format of an optional menu screen for statement access and for other services.

FIG. 8 is an exemplary web format for viewing pages of the full statement.

FIG. 9 illustrates a network or host computer platform, as may typically be used to implement a server.

FIG. 10 depicts a computer with user interface elements, as may be used to implement a personal computer or other type of work station or terminal device.

### Detailed Description

In the following detailed description, numerous specific details are set forth by way of examples in order to provide a thorough understanding of the relevant teachings. However, it should be apparent to those skilled in the art that the present teachings may be practiced without such details. In other instances, well known methods, procedures, components, and circuitry have been described at a relatively high-level, without detail, in order to avoid unnecessarily obscuring aspects of the present teachings.

The teachings herein alleviate one or more of the above noted problems by providing a solution having the ability to redesign documents into summary statements in a print format that follows inserter or wrapping system design guidelines, and reformat detailed statements into an electronically viewable format such as the PDF format. While this can be done by many print manipulation and composition solutions, a solution is provided that helps mailers quickly and easily make the transition from existing document designs to the new single page design of summary information in the print format that is acceptable by existing printers, plus the new PDF format with full document details.

The present teaching provide the ability to pre-enroll customers for electronic statement access, and provide those user credentials on the printed statement. To simplify a user/customer's on-line experience, and to ensure security and privacy, a random and unique password is included on every document. This password, along with the user/customer identifier (ID), can be used to securely view electronic statements. Providing a password will eliminate the need for users/customers to have to enroll for web viewing before being able to access detailed documents. The enrollment process is a step that many new on-line users are not comfortable or familiar with, so pre-enrolling users will increase satisfaction, and provide an extra sense of security because the password has been created by the biller or sender.

The present teachings provide a solution with the ability to insert or wrap the single page document at production speeds that exceed current production rates of about 26,000 documents per hour, and with an 80-85% efficiency level which can produce about 24,000 documents per hour. The estimates for processing a single page summary statement will increase production rates of at about 30,000 documents per hour, with an efficiency of about 95% in order to produce 28,000 documents per hour. The delta is about 4,000 documents an hour which yields an attractive ROI. The present teachings further allow for the processing of a single page summary statement on a simplified inserter or wrapping machine that does not require multiple document input channels and numerous insert feeders, thereby allowing for a lower production cost and maintains the per-document cost below traditional document costs.

The teachings described herein can permit the hosting of the electronic documents in a data center that satisfies corporate and industry security requirements. Some companies will be interested in using their own eStatement infrastructure for hosting detailed electronic statements, and some companies will prefer to have a vendor turn-key that part of the solution. For the former solution, PDF documents will be created such that the mailer can manage. For the latter, a secure web portal that is branded to match the mailer identity will be created. The service will provide guaranteed Service Level Agreement (SLAs), and have a short project delivery time frame. The present teaching can also provide a customer service portal for agents to handle support issues involving both print summary and electronic detailed statements.

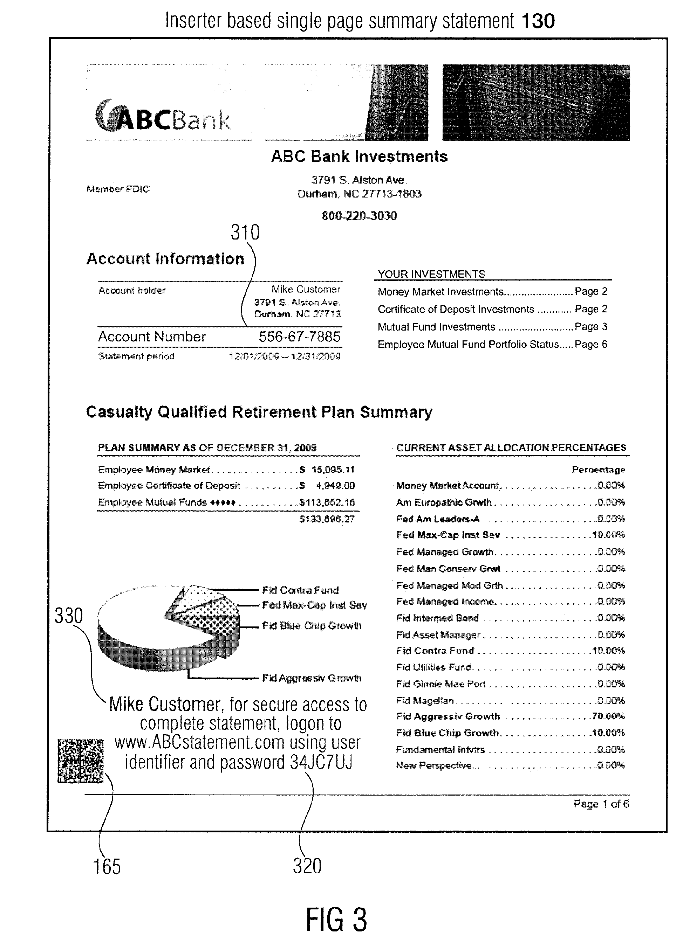

Reference now is made in detail to the examples illustrated in the accompanying drawings and discussed below. It should be noted that FIGS. 3, 4, 6, 7 and 8 are provided as examples of single page summary statements and web displays that are used to illustrate the system and processes required for split medium communications delivery of statements, bills, invoices, advertizing and numerous other formats designable by those skilled in the art. These exemplary format and forms are not intended to limit the scope of the content or layout, but are illustrative in nature only.

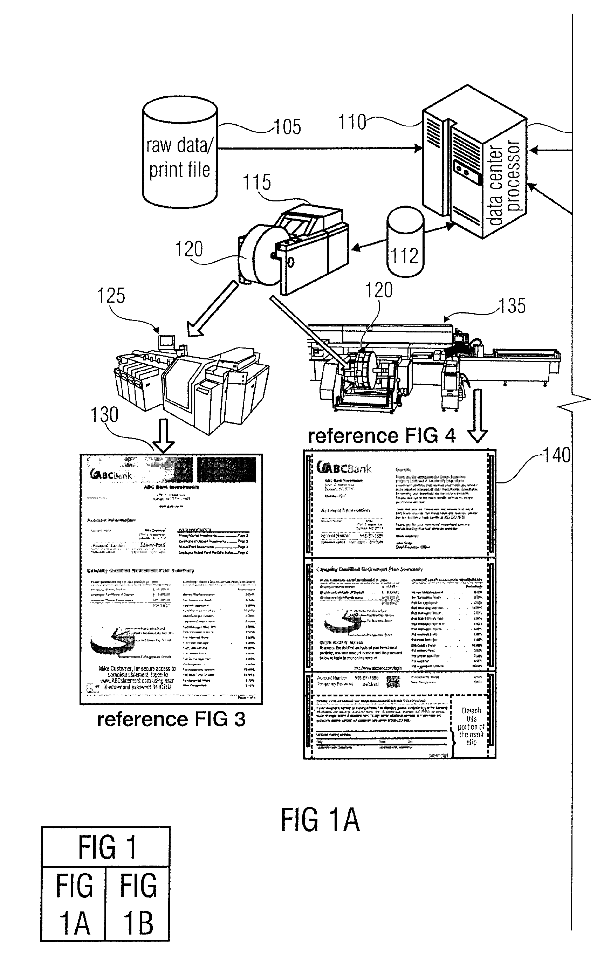

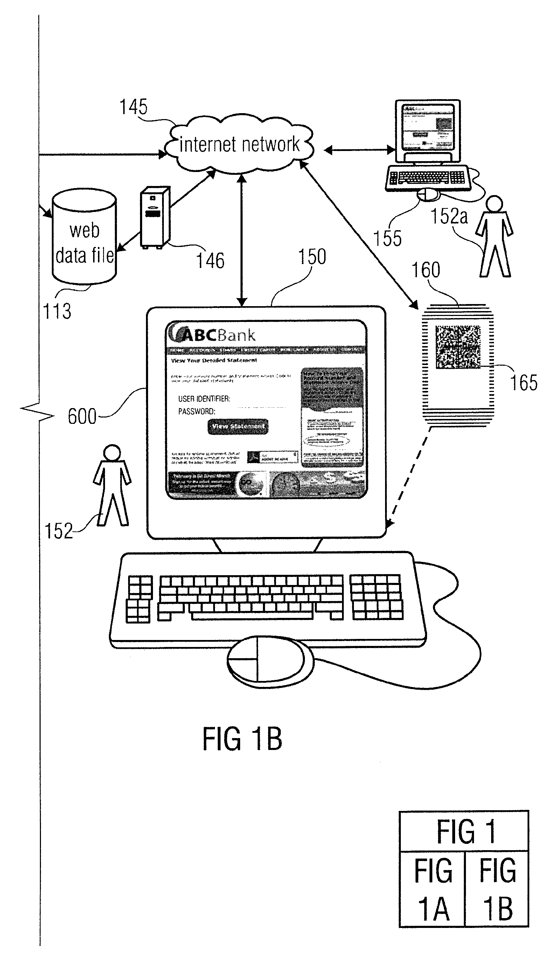

FIG. 1 illustrates an example of system components for the split medium solution. The print file 105 represents a conventional print file that was created to print all pages of the customer communication (e.g. statement). The print file 105 can be created using a software product such as the Bowe Bell + Howell (BBH) Compose tool. The Compose tool takes data from various raw data sources such as, but not limited to, financial data, address data, advertisement data and personal data. This raw data is then reformatted into a format suitable to control a printer by the composition tool. Alternately, the composition tool can be used to create a single page summary statement print file 112 and a data entry into the web data file 113 instead of using a recompose tool to extract the data from the input print file 105. The print file 105 is transferred to the data center processor 110 where the data will be reformatted using a software application, such as the BBH Re-compose tool, to enable the creation and delivery of split medium communication using single page summary statements 130, 140 and web based electronic presentment 150, 155.

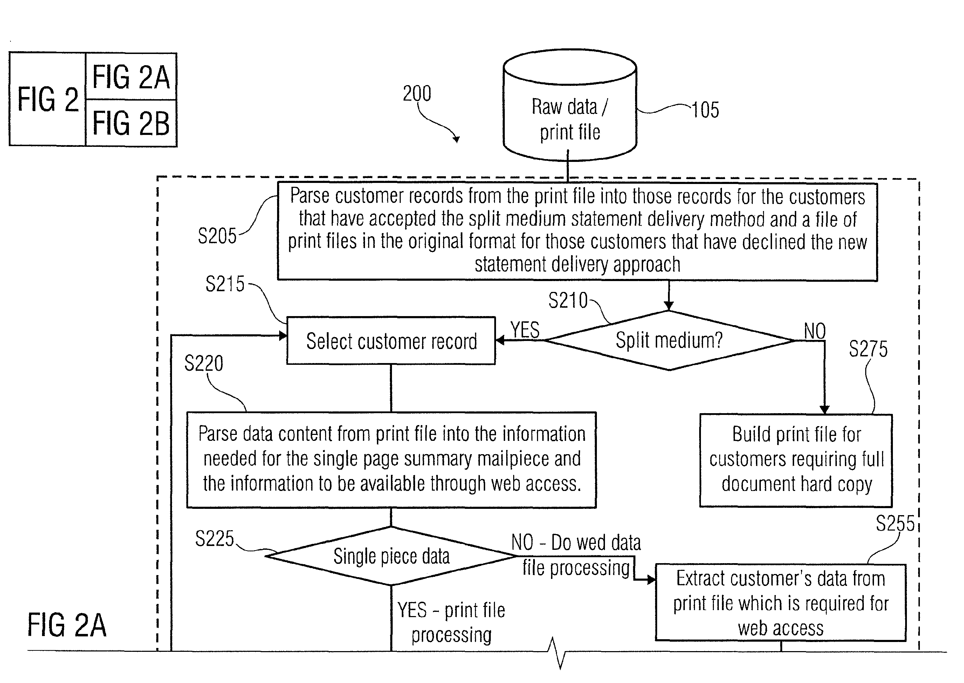

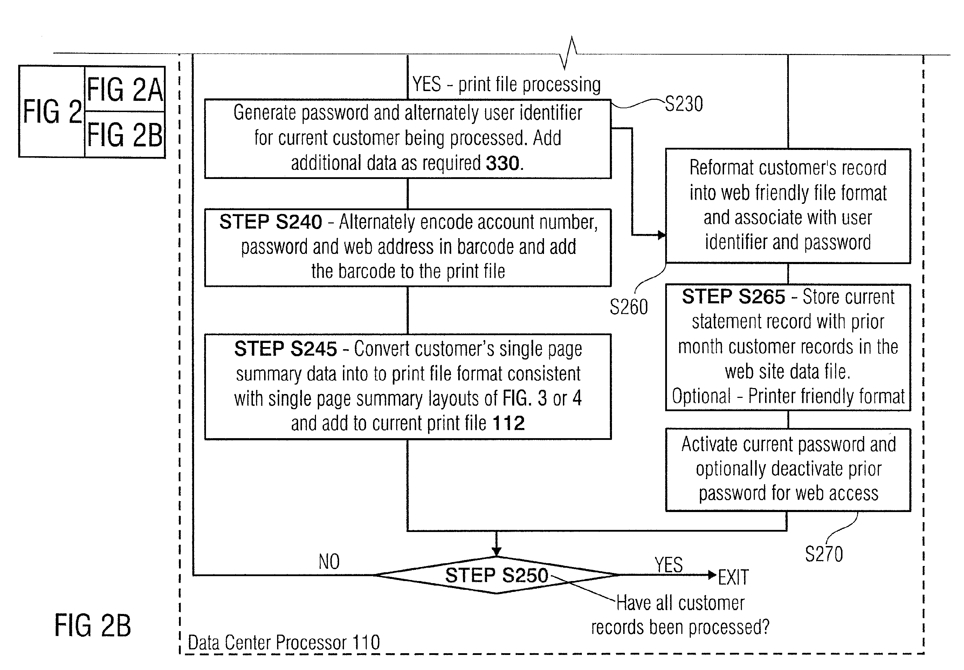

The data center processor 110 processes 200 are described in FIG. 2. The output of the data center processor 110 is the single page summary statement print file 112 and the web friendly file format which is stored in the web data file 113 for future access. The web data file 113 can include, but not limited to a relational database, a coma delineated file, a flat file or other file formats selected by those skilled in the art. The single page summary statement print file 112 is configured according to the form factors required for an inserter 125 or for a wrapping machine 135. The requirements of both mail processing machines 125, 135 are well known by those skilled in the art. An inserter 135 takes folded documents such as 130 and inserts them into an envelope. A wrapping machine 135 folds and applies glue to the single page summary statement 140 to form the outbound envelope and summary statement from a single sheet of paper. An example of a single page wrapping system and related method is described in Application No. 12/702,696, filed February 9, 2010, entitled Mailpiece With Personalized Communication And Return Slip And Related Method Utilizing Wrapper System, and is incorporated herein by reference in its entirety.

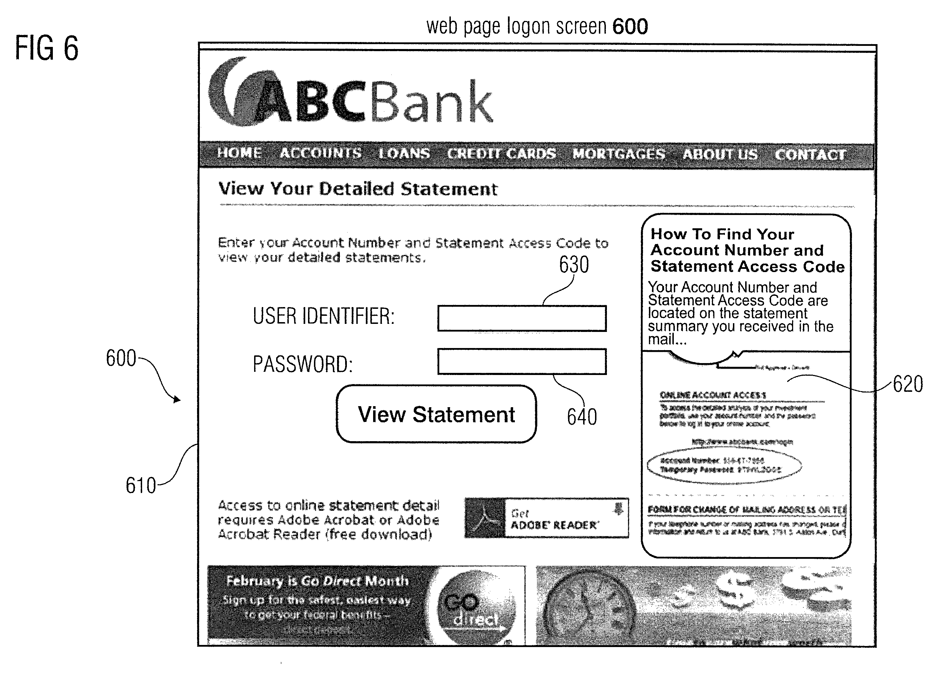

Reference is now made to FIG. 3 which describes the key features of the inserter single page summary statement 130. The summary statement 130 contains several features that are required for web access to the full statement. Both the user/customer identifier 310 and the password 320 maybe generated by the data center processor 110. Alternately, the user identifier maybe the account number as shown in FIG. 3 or it maybe a USERID set by the customer or any other designated alpha/numeric sequence that already appears on the summary statement. The user identifier 310 and password 320 are needed for logon to the web page 600 (FIG. 6). If the customer has established a personal user identifier 310 and created their own password, these values maybe used for logon in place of the system generated user identifier and/or password.

A barcode 165 maybe added as an option to facilitate logon to the web site for viewing the full statement. The barcode will contain at least the user/customer identifier, password and web site URL link. The barcode can be read by a scanner or Personal Digital Assistant (PDA) 160. The password is included in the web access instruction area 330 of the summary statement. The web site connection and logon can be automated by the PDA for viewing on the PDA or the PDA can transfer the data to the computer terminal 150 or 155 through a docking station or wirelessly. This option would enhance ease of use for the customer/user.

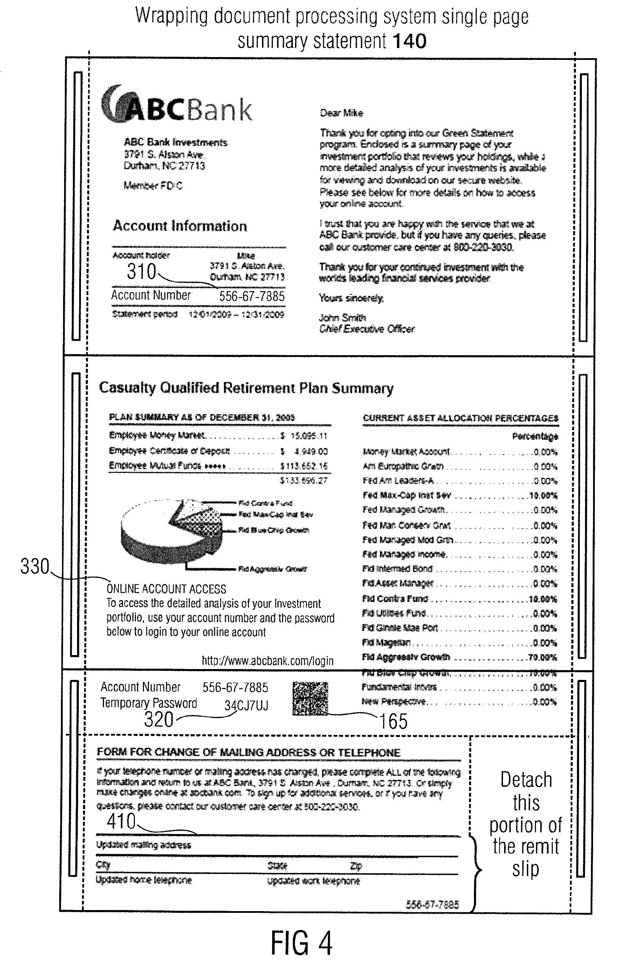

The exemplary summary statements 130 and 14 are for a bank account investment summary, however those skilled in the art can use a similar format for a telephone company invoice with a summary of the monthly phone usage or a credit card usage summary bill, featured advertisements where the web link would access the full catalog, or other applications when the requirement is defined. FIGS. 3 and 4 described the key features for a an inserter single page summary statement 130 and for wrapper single page summary statement 140 respectively. These summary statements have the account number 310 (exemplary user/customer identifier), password 320, web access instructions 330 and optional barcode 165. Due to the form factor for the wrapper single page summary statement 140, a coupon 410 maybe added. For the example in FIG. 4, the coupon allows the customer to sending in an address correction request. Other uses for the coupon 410 are, but are not limited to, a payment coupon, order coupon or a request for additional data coupon.

The mailpiece manufacturing process starts with selecting a job suitable for running on a document processing system (inserter 125 or wrapper 135). The single page summary statement print file 112 is then sent to the printer 115. The printer will print the single page summary statements 130, 140 on a paper roll 120 or on fan folded paper (not shown). The paper roll 120 is loaded on the inserter 125 or wrapper 135 when required. When the job is completed the single page mailpieces will be delivered by the postal service.

Upon receiving the mailpiece, the customer may review the summary statement and may choose to use the user identifier and password to logon to the web site to view the full statement. Numerous customers 152, 152a maybe logged on through their internet 145 connected computers 150, 155. As an option, access to the web site can be made through or facilitated by a PDA 160 that has read the barcode 165 to achieve logon connectivity directly or through a computer 150 linked to the PDA. Access to the web data file 113 is through the internet 145, however the web page application maybe hosted on the data center processor 110 or an alternate computer/server 146. Those skilled in the art will recognize that access to the web data file can be configured using numerous techniques so long as account security protocols are met. Some of the options include, but are not limited to, hosting on a bank server or a central server that provides access for many clients. Secure distribution of the web data file or subsections of the data file to other servers may be required, particularly if the data file was created at a service bureau that processes mail for many clients and is not contracted to host the web site.

FIG. 2 details the processes performed in the data center processor 110 to process the print file 105 for distribution in a split medium configuration. The print file 105 was created by the client from raw data using a composition tool such as the BBH Compose application. Although it is possible to create the two files (single page summary statement print file 112 and the web data file 113) needed for the split medium statement delivery with the composition tool, this option is not included in the FIG. 2 flow chart since this method requires more work for the client's Information Technology (IT) department. Most clients prefer to have split medium statement work done on the print file 105 since this method creates the minimum disruption to current operations. A tool such as the BBH Re-compose tool is used in the data center processer 110 to perform the reformatting and parsing steps of FIG. 2. The Re-compose tool is programmed or scripted to process the print file 105 to provide the single page summary statement print file 112 and the web data file 113 based on the file structures and data file requirements. This programming is required once for each file format and client's requirements for the single page summary statement 130, 140. FIG. 2 shows the steps performed by the Re-compose tool on each customer statement. Other tools maybe integrated with the Re-compose tool to produce the required results, such as but not limited to, password generation and web friendly file format creation.

Continuing with FIG. 2, in step S205, the print file 105 may need to be parsed into two files. Parsing process extracts the customer records, for the customers that have accepted the split medium statement delivery method, from the print file. These records are used to create the single page summary statement print file 112 and the web data file 113 in steps S215 through S270. The balance of the print file records, for those customers that have declined the new statement delivery approach, are collected in a full statement file. Step S210 determines which of these data files are to be processed. If the file to be processed is not the split medium configuration, a print file will be created from the collection of full statement files (step S275). If the data center processor 110 is instructed to process the split medium file, the first customer record is selected in step S215. If all of the customers in the mailing have authorized the split medium summary statement delivery, steps S205, S210 and S275 are omitted.

In step S220, the customer's record in the print file 105 is parsed into the data that is required for the single page summary statement and the data that is required to be available on the web site. In many cases, the entire customer record, including summary data, will be displayed on the web site. Step S225 is not a decision step, but rather represents a division of processing steps that are run in parallel: one path (steps S230, S240 and S245) for the print file 112 and the second path (steps S255 through S270) for the web data file 113. Both paths must be completed before the next customer record is selected S250. Step S230 generates the password 320 that goes with this summary statement 130, 140 and associates the password 320 with the user/customer identifier 310. Those skilled in the art will implement a password creation algorithm that creates a password which meets the security requirements. The password 320 and user identifier 310 are passed to the web data file path step S260 for inclusion in the web page logon process. The password 320 is integrated into the web access instructions 330 both get integrated into the single page summary statement, 130 FIG.3 and 140 (FIG. 4). Alternately, the user identifier, password and web site URL link will be encoded in barcode and integrated into the single page summary statement (step S240), In step S245, the customer's single page summary statement is converted into a print file format which is compatible with the printer 115 and catenated with other previously processed customer records to form the print file 112. Process control is transferred to step S250 until the web data file steps are completed for the current customer record.

For the web data file processing, the data needed for inclusion on the web page is parsed from the customer record step S255. As mentioned earlier, the data can include the entire data record (e.g. statement) or subsections thereof. The customer's record is reformatted into a web friendly file format, such as but not limited to, XML, HTML or PDF (step S260). The user identifier and current password are processed and linked to the customer's record for web access (step S260). In step S265, the current customer records are stored with prior customer records in the web data file 113. The prior customer records are saved to allow the customer to view previous statements, Optionally, printer friendly file formats are created and stored in the web data file 113 or are created on demand to enable the customer to print the full statement. Optionally, a file format maybe created that can be downloaded and stored on the customer's computer 150. The password is activated in step S270 and optionally prior passwords are deactivated depending on security protocol. Process control is transferred to step S250 until the customer's single page summary document 130, 140 print file record is completed. When both parallel processes are complete, step S250 decides the next processing step. If all customer records have been processed, the job is exited. If addition customer records need to be processed, control is returned to step S215 to select the next customer record.

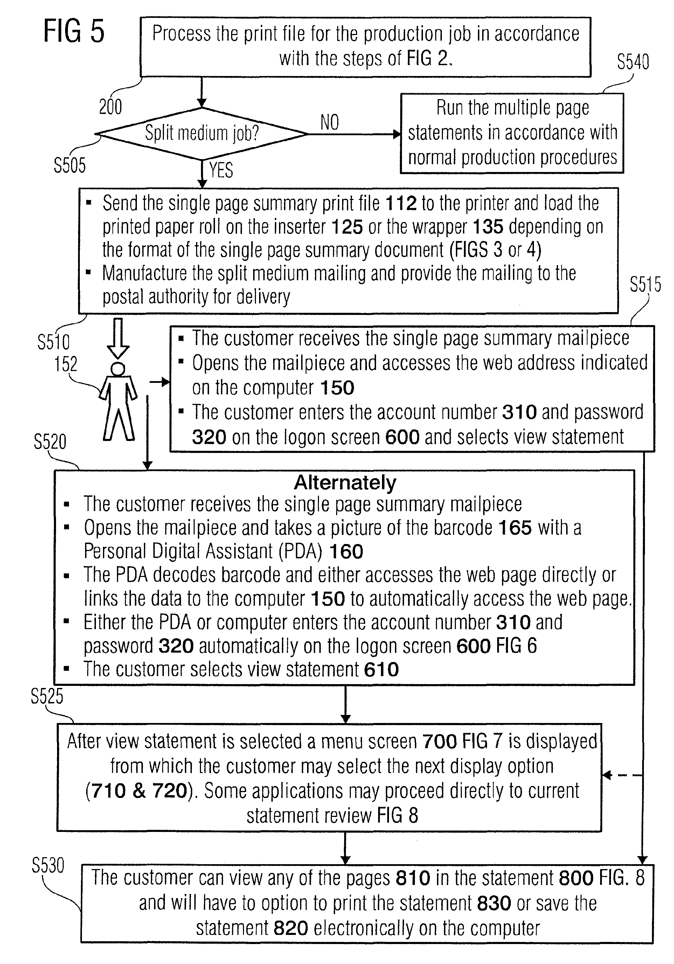

FIG. 5 is an exemplary system flow diagram for the creation of a single page summary statement and for utilization of web access to view the statement. Following the completion of processing the print file, that is required for the current production job, process 200 (FIG. 2), the production job can be initiated. If the production job is not a split medium job S505, the production run will be setup to process multi-page documents in accordance with standard production procedures for an inserter 125 or a wrapping machine 135. For split medium production S510, the single page summary statement print file 112 is sent to the printer 115 to print the paper roll 120 or fan folded paper. The printing job is often done in advance of the production run on an inserter 125 or wrapper 135 document processing system. The printed material is loaded on the inserter 125 or the wrapper 135 depending on the format of the single page summary document (130, 140 in FIGS. 3 or 4). The production job is run to manufacture the split medium mailing that is provided to the postal authority for delivery to the customer 152. After the customer 152 receives the single page summary mailpiece S515, the customer opens the mailpiece to review the summary statement.

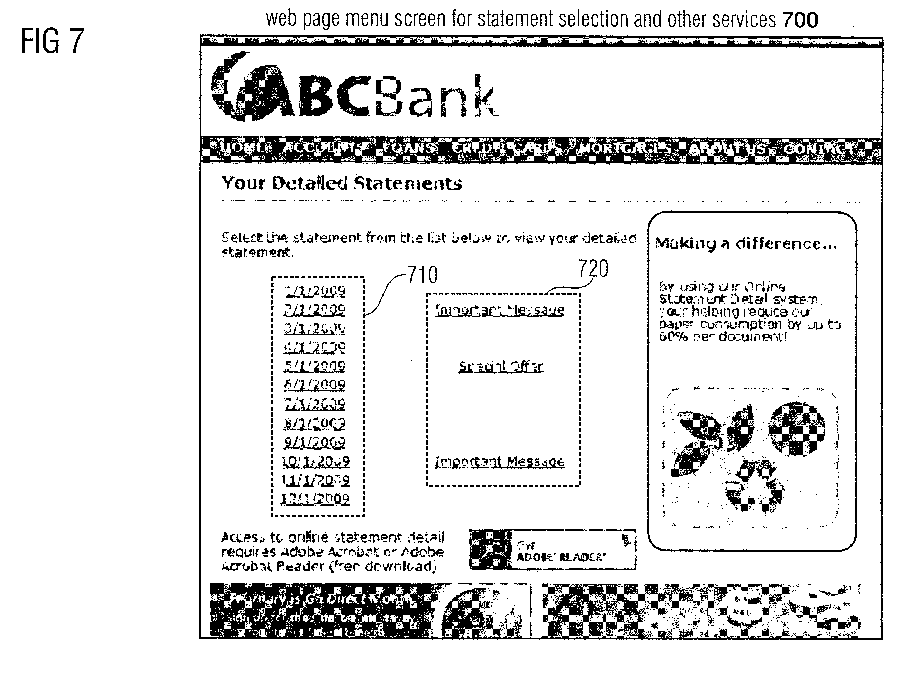

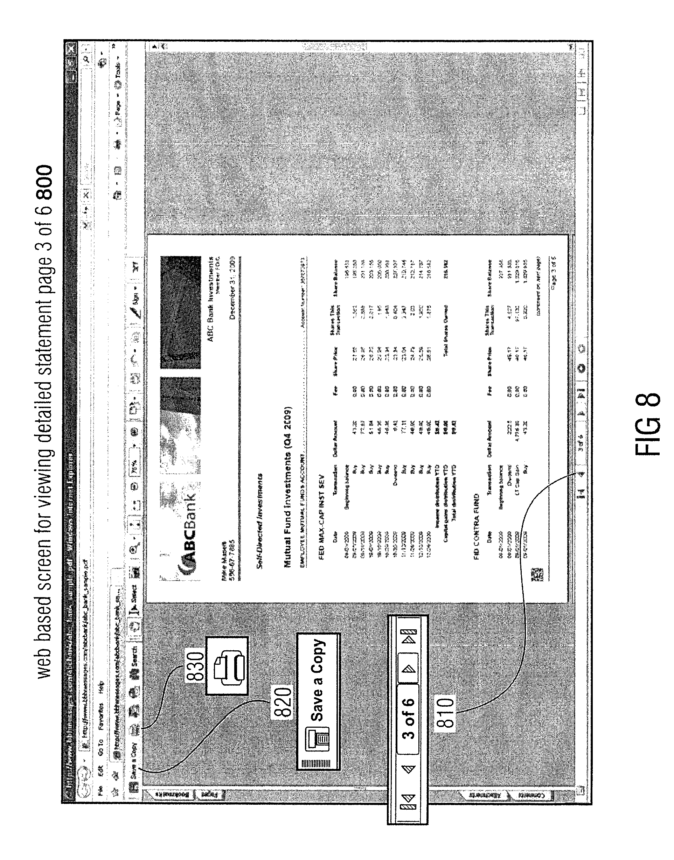

If the customer desires additional information, he/she will open the web browser on the computer terminal 150 and follow the procedure indicated in the web page instructions 620. The customer will enter the user identifier (USERID) 310 in the designated location 630 and the password 320 in its designated location 640 as shown in FIG. 6. Logon instructions 620 are included on the logon screen 600. The view statement button 610 is selected to access the next screen. The next web page shown is either a menu screen 700 (FIG. 7) or a direct link to the current statement 800 (FIG. 8). Those skilled in the art will design different screen layouts and functionality as required for the current application.

FIGS. 6 through 8 are exemplary illustrations of one approach for a bank investment statement web access display screens and are not intended to limit the scope of design options available to a person skilled in the art. In step S525, the view statement button transferred the customer to the menu screen 700 (FIG. 7). The example in FIG. 7 shows the statement selection option 71.0 with selections for viewing the current statement plus the ability to view prior statements. In addition, other links are offered 720, such as but not limited to, important messages and special offers. An exemplary statement viewing screen 800 is shown in FIG. 8. The statement viewing screen 800 is accessed from either the menu screen 700 (step S525) or directly from the view statement (step S515). FIG. 8 illustrates viewing page 3 of 6 of the financial statement. Page selection 810 is accomplished by clicking the right or left arrows to display a higher number or lower number page, respectively. An option to print 830 or save an electronic copy 820 can be provided.

An alternate approach to logging on to the web site is defined in step S520. The customer receives the single page summary mailpiece and opens the mailpiece, The customer then takes a picture of the barcode 165 with a Personal Digital Assistant (PDA) 160. The PDA decodes the barcode and either accesses the web page directly on the PDA or transfers the web site URL link, user identifier 310 and password 320 to the computer 150 to automatically access the web page. Either the PDA or computer enters the user identifier 310 and password 320 automatically on the logon screen 600 (FIG. 6). The customer may then select view statement 610 to view the menu 700 or proceed directly to view the statement 800.

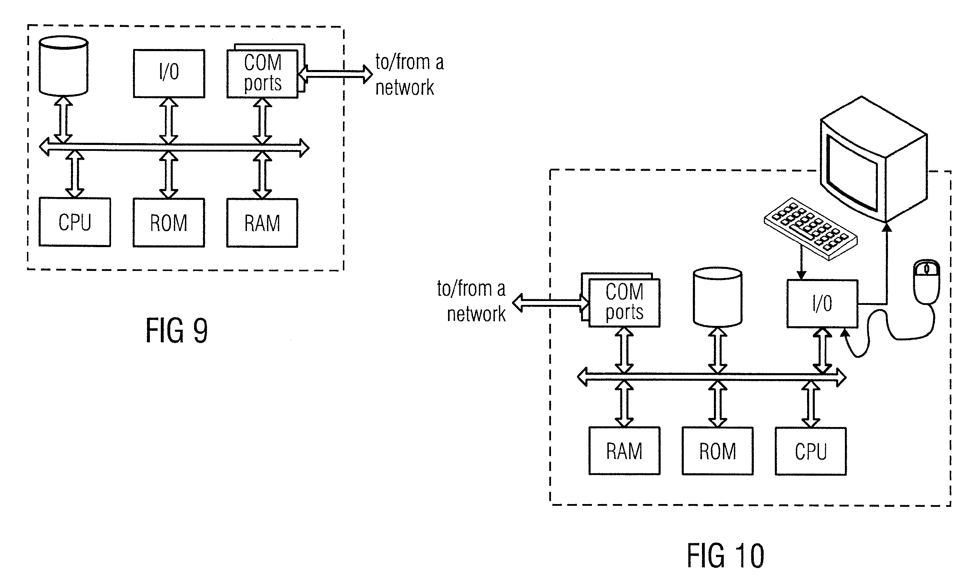

FIGS. 9 and 10 provide functional block diagram illustrations of general purpose computer hardware platforms. FIG. 9 illustrates a network or host computer platform, as may typically be used to implement a server. FIG. 10 depicts a computer with user interface elements, as may be used to implement a personal computer or other type of work station or terminal device, although the computer of FIG. 10 may also act as a server if appropriately programmed. It is believed that those skilled in the art are familiar with the structure, programming and general operation of such computer equipment and, as a result, the drawings should be self-explanatory.

For example, control processor 110 may be a PC based implementation of a central control processing system like that of FIG. 10, or may be implemented on a platform configured as a central or host computer or server like that of FIG. 9. Such a system typically contains a central processing unit (CPU), memories and an interconnect bus. The CPU may contain a single microprocessor (e.g. a Pentium microprocessor), or it may contain a plurality of microprocessors for configuring the CPU as a mutti-processor system, The memories include a main memory, such as a dynamic random access memory (DRAM) and cache, as well as a read only memory, such as a PROM, an EPROM, a FLASH-EPROM or the like. The system memories also include one or more mass storage devices such as various disk drives, tape drives, etc.

In operation, the main memory stores at least portions of instructions for execution by the CPU and data for processing in accord with the executed instructions, for example, as uploaded from mass storage. The mass storage may include one or more magnetic disk or tape drives or optical disk drives, for storing data and instructions for use by CPU. For example, at least one mass storage system in the form of a disk drive or tape drive, stores the operating system and various application software as well as data. The mass storage within the computer system may also include one or more drives for various portable media, such as a floppy disk, a compact disc read only memory (CD-ROM), or an integrated circuit non-volatile memory adapter (i.e. PC-MCIA adapter) to input and output data and code to and from the computer system.

The system also includes one or more input/output interfaces for communications, shown by way of example as an interface for data communications with one or more other processing systems. Although not shown, one or more such interfaces may enable communications via a network, e.g., to enable sending and receiving instructions electronically. The physical communication links may be optical, wired, or wireless.

The computer system may further include appropriate input/output ports for interconnection with a display and a keyboard serving as the respective user interface for the processor/controller. For example, a printer control computer may include a graphics subsystem to drive the output display. The output display, for example, may include a cathode ray tube (CRT) display, or a liquid crystal display (LCD) or other type of display device. The input control devices for such an implementation of the system would include the keyboard for inputting alphanumeric and other key information. The input control devices for the system may further include a cursor control device (not shown), such as a mouse, a touchpad, a trackball, stylus, or cursor direction keys. The links of the peripherals to the system may be wired connections or use wireless communications.

The computer system runs a variety of applications programs and stores data, enabling one or more interactions via the user interface provided, and/or over a network to implement the desired processing, in this case, including those for generating a single page summary statement 130, 140, print files 112, and a web data file 113, as discussed above.

The components contained in the computer system are those typically found in general purpose computer systems. Although summarized in the discussion above mainly as a PC type implementation, those skilled in the art will recognize that the class of applicable computer systems also encompasses systems used as host computers, servers, workstations, network terminal, and the like. In fact, these components are intended to represent a broad category of such computer components that are well known in the art. The present examples are not limited to any one network or computing infrastructure model—i.e., peer-to-peer, client server, distributed, etc.

Hence aspects of the techniques discussed herein encompass hardware and programmed equipment for controlling the relevant document processing as well as software programming, for controlling the relevant functions. A software or program product, which may be referred to as a "program article of manufacture" may take the form of code or executable instructions for causing a computer or other programmable equipment to perform the relevant data processing steps regarding the creation of a single page summary statement 130, 140, print files 112 and a web data file 113 where the code or instructions are carried by or otherwise embodied in a medium readable by a computer or other machine. Instructions or code for implementing such operations may be in the form of computer instruction in any form (e.g., source code, object code, interpreted code, etc.) stored in or carried by any readable medium.

Such a program article or product therefore takes the form of executable code and/or associated data that is carried on or embodied in a type of machine readable medium. "Storage" type media include any or all of the memory of the computers, processors or the like, or associated modules thereof, such as various semiconductor memories, tape drives, disk drives and the like, which may provide storage at any time for the software programming. All or portions of the software may at times be communicated through the Internet or various other telecommunication networks. Such communications, for example, may enable loading of the relevant software from one computer or processor into another, for example, from a management server or host computer into the image processor and comparator. Thus, another type of media that may bear the software elements includes optical, electrical and electromagnetic waves, such as used across physical interfaces between local devices, through wired and optical landline networks and over various air-links. The physical elements that carry such waves, such as wired or wireless links, optical links or the like, also may be considered as media bearing the software. As used herein, unless restricted to tangible "storage" media, terms such as computer or machine "readable medium" refer to any medium that participates in providing instructions to a processor for execution.

Hence, a machine readable medium may take many forms, including but not limited to, a tangible storage medium, a carrier wave medium or physical transmission medium. Non-volatile storage media include, for example, optical or magnetic disks, such as any of the storage devices in any computer(s) or the like. Volatile storage media include dynamic memory, such as main memory of such a computer platform. Tangible transmission media include coaxial cables; copper wire and fiber optics, including the wires that comprise a bus within a computer system. Carrier-wave transmission media can take the form of electric or electromagnetic signals, or acoustic or light waves such as those generated during radio frequency (RF) and infrared (IR) data communications, Common forms of computer-readable media therefore include for example: a floppy disk, a flexible disk, hard disk, magnetic tape, any other magnetic medium, a CD-ROM, DVD or DVD-ROM, any other optical medium, punch cards paper tape, any other physical storage medium with patterns of holes, a RAM, a PROM and EPROM, a FLASH-EPROM, any other memory chip or cartridge, a carrier wave transporting data or instructions, cables or links transporting such a carrier wave, or any other medium from which a computer can read programming code and/or data. Many of these forms of computer readable media may be involved in carrying one or more sequences of one or more instructions to a processor for execution.

While the foregoing has described what are considered to be the best mode and/or other examples, it is understood that various modifications may be made therein and that the subject matter disclosed herein may be implemented in various forms and examples, and that the teachings may be applied in numerous applications, only some of which have been described herein. It is intended by the following claims to claim any and all applications, modifications and variations that fall within the true scope of the present teachings.

## Claims

1. A method for providing a single page summary (130) for a mailpiece and access to expanded customer data by way of a secure website (600), the method comprising steps of:
extracting (S220) summary data from an electronic representation (105) of a customer communication;
generating (S230) secure logon data (310, 320) for web access by the customer;
converting (S245) the summary data and secure logon web access data into a single page print file;
printing (S510) the summary data and secure logon web access data (310, 320) as a single page summary (130);
creating (S510) a mailpiece containing the printed single page with a document processing system (125, 135); and
converting (S255, S260) the expanded customer data into a web accessible file format and saving the data in an electronic format.

2. The method of claim 1, wherein the extracting step (S220) includes:
extracting summary data from an electronic representation for a statement, bill or advertisement.

3. The method of claim 1, wherein the creating step (S510) includes:
creating the mailpiece by way of an inserter system (125), the mailpiece comprising the single page summary (130) as an insert contained within the mailpiece.

4. The method of claim 1, wherein the creating step (5510) includes:
creating the mailpiece by way of a wrapper system (135), the mailpiece formed from the single page summary (130).

5. The method of claim 2, further comprising the step of:
accessing (S515) the saved customer accessible file by the customer by way of the secure web access (600) using information printed on the single page summary (130).

6. The method of claim 5, wherein the accessing step (S515) includes:
the customer inputting customer credentials (310, 320) provided on the single page summary (130).

7. The method of claim 6, wherein the customer credentials include a customer identifier (310) and a password (320).

8. The method of claim 8, wherein the password (320) is a temporary password.

9. The method of claim 7, wherein the customer identifier (310) is computer generated and printed on the single page summary (130).

10. The method of claim 1 for processing a customer record, wherein
the extracting step (S220) includes:
parsing the customer record stored as raw data or a print file (105) into:
summary data required for generation of a single page customer communication (130) to be mailed to a customer, and
expanded data to be available to the customer by way of web access;
the generating step (S230) includes:
generating a password (320) and customer identifier (310), the password (320) and customer identifier (310) to be provided to the customer on the single page customer communication (130);
the first converting step (S245) includes:
converting the summary data into a print file used to create the single page customer communication (130); and
the second converting step (S255, S260) includes:
reformatting the expanded data into a web accessible file format, the web accessible file format being associated with the password (320) and customer identifier (310).

11. The method of claim 10, further comprising the step of:
activating the password (320) and optionally deactivating previous passwords.

12. A computer system programmed to implement the method of claim 10.

13. A program product, comprising a physical machine-readable storage medium and executable code embodied in the medium, wherein execution of the code by at least one programmable computer causes the at least one programmable computer to perform the steps of the method of claim 10.

14. A system for providing a single page summary (130) for a mailpiece and access to expanded customer data by way of a secure website (600), the system comprising:
a processor (110) configured to
extract (S220) summary data from an electronic representation (105) of a customer communication;
generate (S230) secure logon data (310, 320) for web access by the customer; convert (S245) the summary data and secure logon web access data (310. 320) into a single page print file; and
convert (S255, S260) the expanded customer data into a web accessible file format and saving the data in an electronic format;
a printer (115) for printing a single page summary (130), the single page summary (130) including the summary data and secure logon web access data (310, 320); and
a document processing system (125, 135) configured to generate a mailpiece including the single page summary (130).

15. The system of claim 14, wherein the document processing system includes an inserter system (125) configured to insert the single page summary (130) into the mailpiece, or a wrapper system (135) configured to manufacture the mailpiece from the single page summary (130).
